# EUROPEAN PATENT APPLICATION

(11) **EP 1 661 497 A1**
(43) Date of publication of application: **31.05.2006**
(21) Application number: 04257309.7
(22) Date of filing: 24.11.2004
(51) Int. Cl.: A47J 27/21, B65D 71/00

(54) **Improvements in and relating to kettles**

(71) Applicant: Salton Europe Limited, Manchester M35 0HS (GB)
(72) Inventor: Etherington, David, Manchester M35 0SL (GB); Carss, Graham, Lancashire (GB)
(74) Representative: Davies, Robert Ean

(57) **Abstract**

Disclosed is a kettle body (100), arranged for connection to a power unit (200), and configured such that a first said kettle body can be substantially accommodated inside another said second kettle body.

## Description

The present invention relates to improvements in kettles and other water heating devices.

Prior art electric kettles are routinely found in many kitchens. Older kettles tend to be of the type where the power lead is arranged to plug into a power outlet at one end and directly into the kettle body at the other end. This particular arrangement has fallen somewhat out of favour in recent times as the kettle cannot be moved very far away from the power outlet without unplugging the power lead from the kettle where, if it remains connected to the outlet, it can pose an electrocution danger.

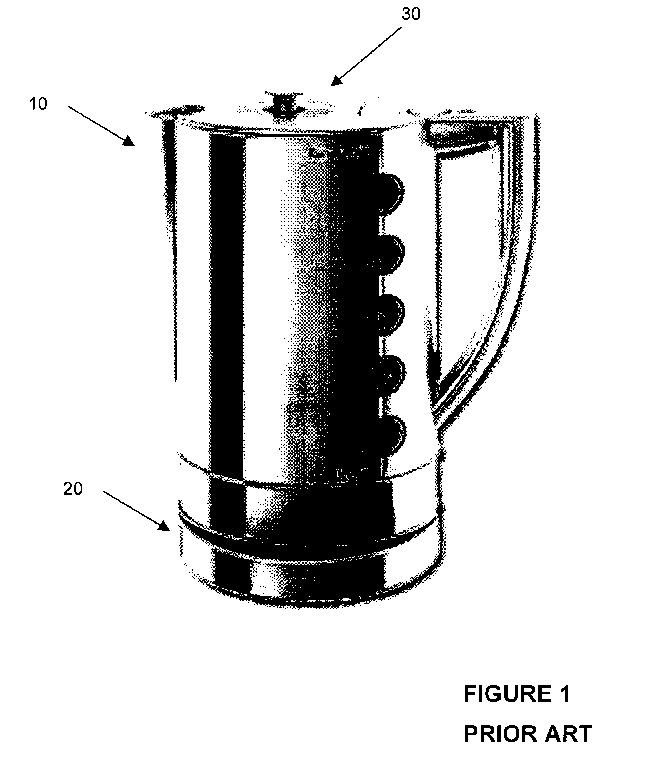

To overcome this problem and to make the kettle more transportable around the kitchen, an arrangement has been adopted whereby the kettle body, including the water reservoir and heating element, is arranged to sit on and connect to a separate base unit. Such a prior art kettle is shown in Figure 1. The base unit 20 includes an integral power lead, which is permanently connected to the base at one end and is terminated in a plug for connection to a power outlet at the other.

The base unit 20 includes an electrical connector, which couples with a mating connector on the underside of the kettle body 10. The connector is arranged so that when the kettle body 10 is removed from the base unit 20, the electrical conductors, which form part of the connector and are connected to a mains voltage, are inaccessible, and thus safe.

An advantage of such an arrangement is that the base unit 20 is able to be left permanently connected to a power source, while the kettle body 10 may be removed from the base unit 20 without leaving any potentially dangerous dangling leads or easily accessible mains voltages.

Kettles of either of the types described above (i.e. those having separate base units or not) are typically made of a plastics material, such as polypropylene. Other plastics materials, or metals, may also be used. The kettle body 10 usually has an integral lid 30, which is hingedly attached. Once manufactured, typically in a location remote from the intended market, (such as China, for sale in Europe), the finished kettle is individually packaged into a plastic bag, which is then packed into a specially constructed cardboard box, having custom-sized and shaped inserts to receive the particular kettle. The box including the kettle is significantly larger than the kettle itself, with the packaging being required to protect the kettle during its journey from the manufacturing location to the warehouse, from where it is dispatched for further distribution to the retailer and finally to the purchaser.

In effect, the volume of a given shipping container containing a consignment of several hundred or thousand such boxed kettles occupies a volume several times that occupied by the kettles alone. This clearly leads to extra costs in terms of packaging and transport, and this cost contributes directly to the price paid by the final purchaser of the product. In fact, it is believed that a considerable proportion of the purchase price of a kettle bought in Europe is accounted for by the cost of transporting it from the Far East e.g. China.

According to the present invention there is provided a kettle body, arranged for connection to a power unit, and configured such that a first said kettle body can be substantially accommodated inside another said second kettle body.

Preferably, the kettle body comprises a handle.

Preferably, said handle is substantially hollow and arranged to receive and accommodate a similar handle of a similar kettle body.

Preferably, said kettle body further comprises a power unit for coupling to said kettle body and to a power source.

Preferably, said power unit comprises a protruding power connection for coupling with a mating part on an underside of the kettle body.

Preferably, the power unit comprises a recess on its underside to accommodate the protruding power connection of a similar power unit.

Preferably, said kettle body further comprises a lid arranged to be semi-permanently attached to said kettle body.

Preferably, said lid is configured to co-operate with one or more similar lids such that a plurality of said lids may stack efficiently.

For a better understanding of the invention, and to show how embodiments of the same may be carried into effect, reference will now be made, by way of example, to the accompanying diagrammatic drawings in which:
Figure 1 shows a prior art kettle of the kind having a separate base unit for supplying power to the kettle;
Figure 2 shows a kettle body according to an embodiment of the present invention;
Figure 3 shows a plurality of stacked kettle bodies according to an embodiment of the present invention;
Figure 4 shows a base unit according to an embodiment of the present invention;
Figure 5 shows a plurality of stacked base units according to an embodiment of the present invention;
Figure 6 shows a lid according to an embodiment of the present invention;
Figure 7 shows a plurality of stacked lids according to an embodiment of the present invention; and
Figure 8 shows a fully assembled kettle according to an embodiment of the present invention.

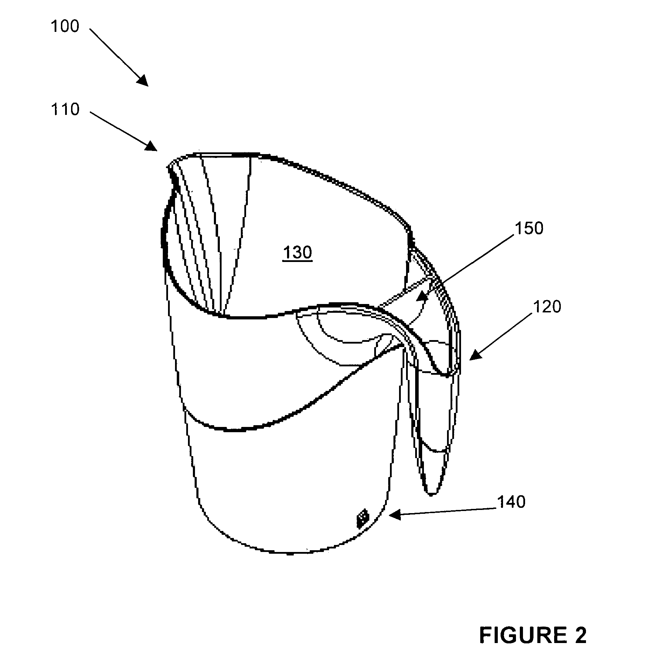

Figure 2 shows a perspective view of a kettle body 100 according to a first embodiment of the present invention. Kettle body, or jug, 100 comprises a spout 110, a handle 120 and an internal cavity 130 for boiling water. Also provided in kettle body 100 are a power switch 140 and a heating element (not shown), which is located beneath the lower internal surface of the cavity 130.

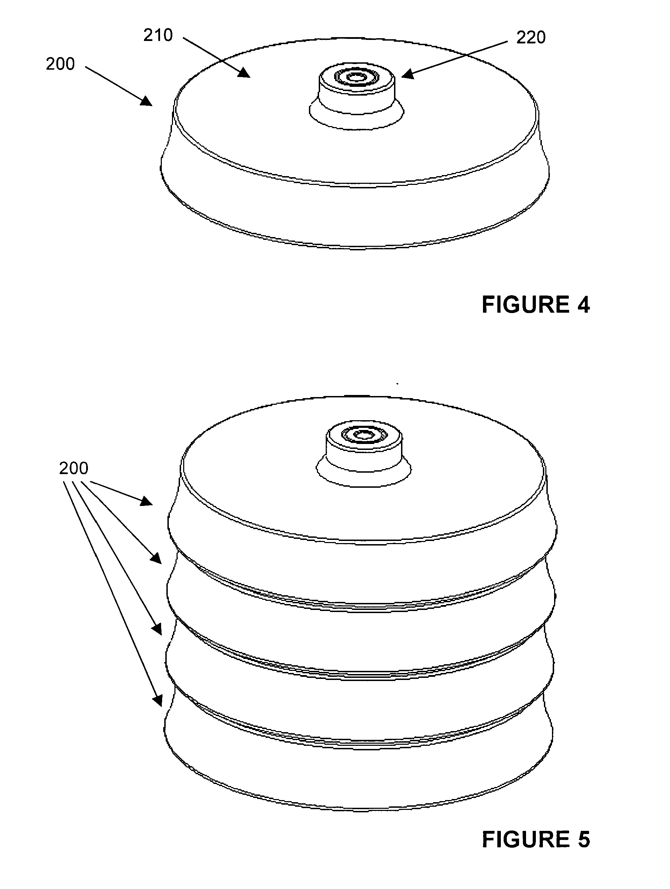

In use, the kettle body 100 is filled with water and placed on base unit 200 (shown in Figure 4). When the power switch 140 is switched to the 'on' position, power is supplied to the element and the temperature of the water in the cavity 130 rises. Once the water is at boiling point, or some other defined temperature, further switching means are triggered to stop the boiling process.

The base of the kettle body is substantially circular. This allows the body 100 to be placed on the base unit 200 in any orientation. The area of the opening to the kettle body at the top of the body is larger than the area of the base of the body. The kettle body 100 therefore tapers from the top to bottom.

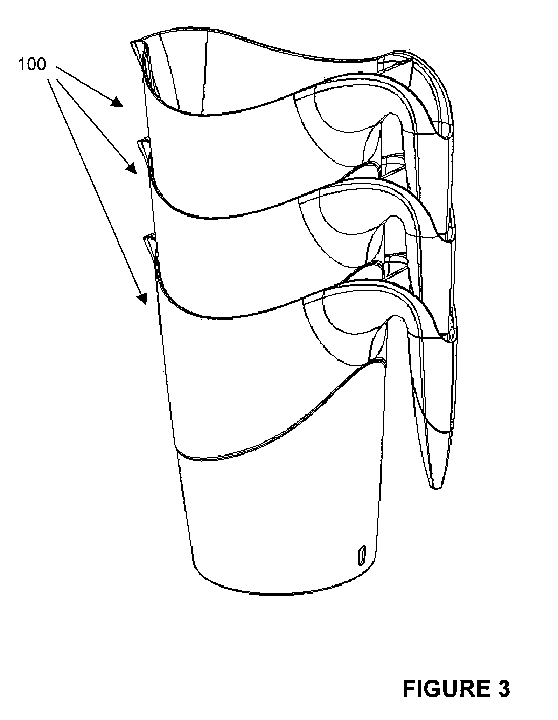

In this way, one kettle body may be stacked inside another. This arrangement is shown in Figure 3, where three such kettle bodies 100 are shown inter-stacked. Clearly, many more kettle bodies 100 may be stacked, as required.

The stacking of the kettle bodies 100 in Figure 3 is further facilitated by the provision of a handle 120 that is at least partially hollow. In this way, the handle of the kettle body immediately above any given kettle body can be accommodated inside its handle, allowing a closer packing of the kettle bodies.

In cases where it is not possible or desirable to provide a hollow handle, it is still possible to realise many of the advantage of embodiments of the present invention. In particular, kettle bodies 100 may be arranged to be stackable such that the handle of a first kettle body, placed inside a second kettle body, lies adjacent the handle of the second kettle body. By repeating this stacking pattern, successive handles form a spiral or helical arrangement.

In prior art kettles, the means by which the boiling process is switched off in response to the included water reaching boiling point, is normally a so-called steam switch located in an upper part of the kettle body - normally in the upper part of the handle. The steam switch is a device that is sensitive to a particular temperature, and is used to switch off the power to the kettle. The switch normally comprises a simple bimetallic strip, whereby differential expansion of a pair of metals causes a break in the circuit supplying power to the element.

The main power switch 140 is often located in the handle 130 of the kettle, along with the steam switch, and the presence of these parts can make it difficult or impossible to make the handle completely or partially hollow such that it can accommodate the handle of another kettle as illustrated in Figure 3.

If the steam switch is removed from the handle, some other means of switching off the power to the kettle when it has boiled is desirable. A suitable alternative is the provision of a thermostatic switch provided in the cavity 130 of the kettle body. Such a switch can be located at any suitable position in the cavity, but is preferably located near the heating element.

Configuration of the kettle bodies 100 such that they are stackable, as described, provides a part of the benefit of embodiments of the present invention. The base units 200 associated with the kettle bodies 100 may also be made to stack to minimise the volume they occupy. Figure 4 shows a perspective view of a single base unit 200. The base unit 200 comprises a generally planar surface 210, which supports the kettle body 100 when placed on the base unit. Protruding from the centre of the surface 210 is a power connector 220 which couples with a mating part (not shown) on the underside of the kettle body.

To facilitate stacking of the base units, as shown in Figure 5, the underside of each base unit 200 is provided with a recess (not shown) for accommodating the connector 220 of another base unit 200. In this way, a separate stack of several base units 200 can be assembled for shipping along with the stack of several kettle bodies 100.

Generally, kettles are provided with a lid to close off the opening at the upper part of the kettle body 100. In embodiments of the present invention, a fully integrated lid would interfere with the stacking of the kettle bodies. However, it is desirable to provide a lid so that the hot water in the cavity 130 is not accessible, which could be dangerous. The presence of a lid also speeds up the boiling process by retaining heat within the cavity 130.

In keeping with the other components of the complete kettle, a separate lid 300 is provided which is configured such that multiple lids may be stacked for storage and/or shipping.

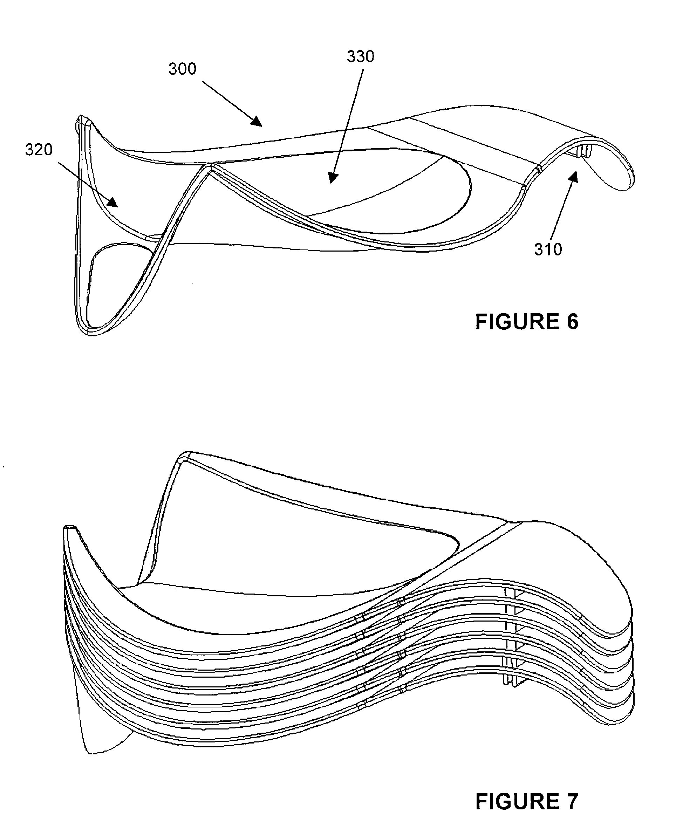

Figure 6 shows a single lid 300. It is provided with means 310 to attach it semi-permanently to the kettle body 100. A suitable means of connection is 'snap-fit', where one or more projections is provided on either the lid or the kettle, with one or more complementary mating parts on the respective other part. A suitable mating part is wall or divider 150 which separates the boiling cavity 130 of the kettle from the hollow handle 120.

Once attached in this way, the opening at the top of the cavity 130 is substantially closed off, except for a portion 320 adjacent the spout 110 to facilitate filling and emptying the kettle. The lid 300 also closes off the hollow portion of the handle 120, since this has no useful purpose once a kettle has been purchased and is in use.

The lid 300 comprises a recessed portion 330. In use, when a user wishes to fill the kettle with cold water for boiling, the recess 330 allows filling to be achieved with less accuracy being required in directing cold water into the spout 110, 320. As long as water is directed into the recess 330, it will pool there to some extent and then trickle into the spout via cut-away portion 320.

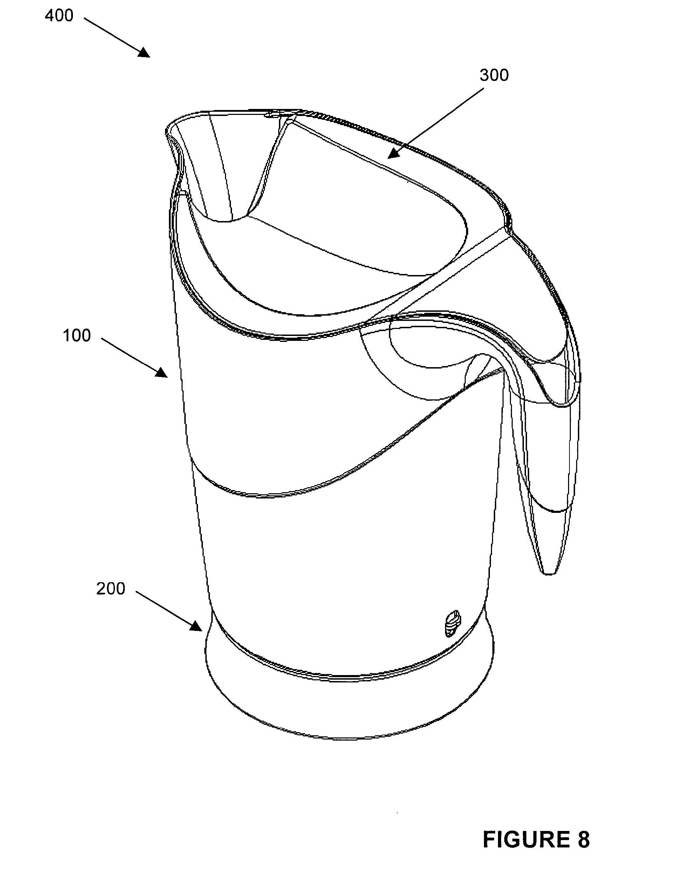

Figure 8 shows a completed kettle 400, comprising a kettle body 100, base unit 200 and lid 300.

When the three individual parts - kettle body 100, base unit 200 and lid 300 - are manufactured, they may be stacked as has been described and transported to their destination. The stacking configuration of the parts means that a consignment of a given number of kettles according to an embodiment of the invention will occupy significantly less volume than a consignment of the same number of prior art kettles.

By transporting the kettles in this manner, complete kettle assemblies 400 may be assembled either before shipping to the retailer, or the end-user may be the one who assembles the kettle only when it reaches its final destination.

By manufacturing and shipping the constituent parts of the kettle 400 separately, it is possible to arrange for each part 100, 200, 300 to be manufactured in one of a range of different colours so that the purchaser (either wholesaler or end-user) is able to 'mix and match' colours to achieve a distinctive look of their choice.

In this way, the final packaging in which the consumer takes the completed kettle 400 home, can be provided in a flat-pack form, which can be simply assembled once the customer has selected a suitable mix of individual kettle elements as described. In this way, the expense of transporting large amounts of packaging material for long distance may be minimised, or at least reduced.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A kettle body, arranged for connection to a power unit, and configured such that a first said kettle body can be substantially accommodated inside another said second kettle body.

2. A kettle body as claimed in claim 1 wherein the kettle body comprises a handle.

3. A kettle body as claimed in claim 2 wherein said handle is substantially hollow and arranged to receive and accommodate a similar handle of a similar kettle body.

4. A kettle body as claimed in any preceding claim further comprising a power unit for coupling to said kettle body and to a power source.

5. A kettle body and power unit as claimed in claim 4, wherein said power unit comprises a protruding power connection for coupling with a mating part on an underside of the kettle body.

6. A kettle body as claimed in claim 5 wherein the power unit comprises a recess on its underside to accommodate the protruding power connection of a similar power unit.

7. A kettle body as claimed in any preceding claim further comprising a lid arranged to be semi-permanently attached to said kettle body.

8. A kettle body as claimed in claim 7 wherein said lid is configured to co-operate with one or more similar lids such that a plurality of said lids may stack efficiently.

9. A kettle comprising a kettle body, a power unit and a lid as claimed in any one or more of the preceding claims.
